# EUROPÄISCHE PATENTSCHRIFT

(11) **EP 1 358 115 B1**
(45) Veröffentlichungstag und Bekanntmachung des Hinweises auf die Patenterteilung: **13.05.2009**
(21) Anmeldenummer: 02712727.3
(22) Anmeldetag: 31.01.2002
(51) Int. Cl.: B65D 85/74, B65D 83/76, A47J 9/00

(54) **VORRICHTUNG ZUR ABGABE VON STREICHFETT**
DEVICE FOR SUPPLYING SPREADABLE FATS
DISPOSITIF POUR LA DISTRIBUTION DE GRAISSE A TARTINER

(30) Priorität: 31.01.2001 DE 20101831 U
(43) Veröffentlichungstag der Anmeldung: 05.11.2003
(73) Patentinhaber: Dutz, Werner, 49757 Werlte (DE)
(72) Erfinder: Dutz, Werner, 49757 Werlte (DE)
(86) Internationale Anmeldenummer: PCT/DE2002/000349
(87) Internationale Veröffentlichungsnummer: WO 2002/060786

(56) Entgegenhaltungen:
- WO-A-93/23314
- DE-A- 10 022 049
- DE-A- 19 732 193
- US-A- 2 845 707

## Beschreibung

Die Erfindung betrifft eine Vorrichtung zur Abgabe von Streichfett, insbesondere Butter, in Kleinportionen.

Butter wird üblicherweise in abgepackten Portionen' zu 250 Gramm vertrieben. In der Gastronomie ergibt sich unter Berücksichtigung der Hygienebestimmungen das Problem, daß an jeden Gast möglichst nur eine kleinere Menge Butter ausgegeben wird, da bei einem Essen, insbesondere einem Frühstück, nur etwa 5 bis 30 Gramm benötigt werden. Insbesondere für die Gastronomie werden daher Kleinstmengen Butter, von etwa 5 oder 10 g, separat verpackt hergestellt. Umgerechnet auf den Kilopreis ist solchermaßen verpackte Butter vergleichsweise teuer. Eine andere Möglichkeit besteht darin, größere Butterstücke manuell in kleine Portionen aufzuteilen und diese auf Tellern oder in Wasser schwimmend anzubieten. Hierbei ergibt sich das Problem, daß die einzelnen Butterstücke zusammenhängen und sich nur schwer voneinander lösen lassen. Auch wird diese Lösung von einer Vielzahl von Gästen als unappetitlich empfunden.

Die WO-A-93/23314 beschreibt ein Verfahren und eine Vorrichtung zur Zuführung eines halbfesten, eßbaren, Fettes, in einem Lebensmittelproduktionsprozeß. In die Vorrichtung wird ein Verpackungselement, in dem das Fett angeliefert wird, eingesetzt. Die Vorrichtung weist einen verfahrbaren Stempel auf, der von einer Antriebseinrichtung bewegt wird. Das Fett wird aus dem Verpackungselement herausgedrückt und dabei von einem Proportionierelement in gewünschte Portionen getrennt.

Der Erfindung liegt die Aufgabe zugrunde, eine Vorrichtung zur Abgabe von Streichfett in Kleinportionen zu schaffen.

Die Lösung dieser Aufgabe erfolgt mit einer Vorrichtung mit den Merkmalen des Patentanspruchs 1. Vorteilhafte Weiterbildungen der Erfindung sind in den Unteransprüchen angegeben.

Dabei weist die Vorrichtung zur Abgabe von Streichfett, insbesondere Butter, wobei in der Vorrichtung ein Behältnis zur Aufnahme des Streichfettes vorgesehen ist und das Behältnis zur Aufnahme des Streichfettes eine Abgabeöffnung aufweist, in dem Behältnis zur Aufnahme des Streichfettes ein verfahrbarer Stempel vorgesehen ist und die Vorrichtung eine Antriebseinrichtung aufweist, die auf dem verfahrbaren Stempel wirkt, erfindungsgemäß ein Gehäuse auf, in das das Behältnis zur Aufnahme des Streichfettes lösbar einsetzbar ist und in dem Gehäuse ist weiterhin eine Kühleinrichtung vorgesehen, mit der das Behältnis zur Aufnahme des Streichfettes kühlbar ist.

Mit einer derartigen Vorrichtung ist es möglich, ein Streichfetts, insbesondere Butter, das in einem Behältnis aufgenommen ist, mit Hilfe einer Antriebseinrichtung und eines in dem Behältnis angeordneten Stempels durch die Abgabeöffnung in dosierbarer Weise abzugeben. Es können dann also größere Mengen Butter gekauft werden, die in das Behältnis gegeben und dann portionsweise an den Benutzer der Vorrichtung abgegeben werden.

Das Behältnis zur Aufnahme des Streichfettes ist bevorzugt im wesentlichen zylindrisch ausgebildet, da auf diese Weise die Mechanik besonders günstig aufbaubar ist. Es sind jedoch auch andere Formen, wie beispielsweise im Querschnitt eckige oder elliptische Formen möglich. Bevorzugt ist das Behältnis zur Aufnahme des Streichfettes im Bereich der Abgabeöffnung verjüngt ausgebildet, um auf diese Weise die Führung des Streichfettes zur Abgabeöffnung hin zu richten. Im Bereich der Abgabeöffnung ist günstigerweise eine Schneideinrichtung angeordnet, mit der das von der Vorrichtung abgegebene Streichfett von dieser portionsweise abgetrennt wird. Die Schneideinrichtung arbeitet bevorzugt automatisch, obwohl auch ein manueller Betrieb möglich ist und steht günstigerweise mit der Antriebseinrichtung in Datenverbindung, so daß nach einem bestimmten Vortrieb der Antriebseinrichtung, der einer abzugebenden Portion entspricht, die Schneideinrichtung aktiviert wird und das durch die Abgabeöffnung gepreßte Streichfett abtrennt. Die Schneideinrichtung kann dabei entweder als Draht oder als Messer ausgebildet sein. Bevorzugt ist die Schneideinrichtung lösbar an der Vorrichtung angeordnet, so daß diese leicht entnommen und gereinigt werden kann.

In einer anderen bevorzugten Weiterbildung der Erfindung ist die Schneideinrichtung als schwenkbarer Bügel ausgebildet, der mit Schrauben in Sacklochbohrungen befestigt ist, die in dem Behältnis zur Aufnahme des Streichfetts angeordnet sind. Der Bügel kann dann mit Hilfe von Elektromagneten an der Abgabeöffnung vorbeigeschwenkt werden. Durch die Befestigung an dem Behältnis zur Aufnahme des Streichfetts ist sichergestellt, daß die Schneideinrichtung bei jeder Reinigung des Behältnisses mit diesem zusammen gereinigt wird.

In einer anderen bevorzugten Weiterentwicklung ist die Abgabeöffnung in einer wechselbaren Abgabeeinrichtung angeordnet. Alternativ kann die Abgabeeinrichtung auch unten in das Behältnis eingelegt sein, wobei in dem Behältnis im unteren Endbereich ein Falz ausgebildet ist, der in die Öffnung übersteht, so daß die Abgabeeinrichtung mit der Abgabeöffnung von innen in den Falz eingelegt werden kann. Dadurch ist es möglich, die Vorrichtung mit individuell an die Benutzerbedürfnisse angepaßten Abgabeöffnungen auszurüsten, so daß die Butter beispielsweise in Form eines Firmenlogos oder eines besonderen Emblems oder mit einer besonderen Verzierung abgegeben werden kann.

In einer anderen bevorzugten Weiterentwicklung der Erfindung ist der Stempel, der in dem Behältnis zur Aufnahme des Streichfettes verfahrbar ist, derart ausgebildet, daß der Stempel in seiner Form an den verjüngten Endbereich des Behälters angepaßt ist. Der Stempel ist dann im Querschnitt keilförmig oder trapezförmig ausgebildet, so daß der Stempel bis an den Böden des Behälters gefahren werden kann und dabei dann den Bodenraum vollständig ausfüllt. Der Stempel weist bevorzugt eine umlaufende Dichtlippe auf, die insbesondere an den Flanken des Kegelstumpfes angeordnet ist und bis an die Seitenwände des Behältnisses reicht. Ergänzend können zusätzliche Dichtelemente, wie beispielsweise ein O-Ring im Grundbereich des Stempels angeordnet sein und auf diese Weise eine dichte Verbindung zwischen Stempel und Behältnis herstellen. Diese Dichtelemente sind insbesondere für einen pneumatischen Antrieb des Stempels wichtig. Weiterhin weist der Stempel an seiner Oberseite günstigerweise eine Verbindungseinrichtung auf, die dazu ausgebildet ist, mit der Antriebseinrichtung zusammenzuwirken, so daß die Antriebseinrichtung den Stempel in definierter Weise in dem Behältnis nach unten verfährt. Diese Verbindungseinrichtung ist bevorzugt als Mulde ausgebildet, in die ein entsprechend ausgebildeter Kugelkopf der Antriebseinrichtung eingreifen kann. Auch eine Vielzahl anderer Ausgestaltungen sind möglich. Die Antriebseinrichtung ist bevorzugt in einem oberen Teil der Vorrichtung angeordnet, so daß der Antrieb nach unten, auf den darunter angeordneten Stempel wirkt und das Streichfett nach unten abgegeben wird.

Erfindungsgemäß ist die Vorrichtung so ausgebildet, daß ein äußeres Gehäuse vorgesehen ist, in das das Behältnis zur Aufnahme des Streichfettes lösbar einsetzbar ist. Dies hat insbesondere auch den Vorteil, daß das Behältnis mit dem Streichfett der Vorrichtung entnommen und gekühlt werden kann und bei Bedarf in die Vorrichtung eingesetzt wird. Auf diese Weise ist eine Lagerung des Streichfettes bei tiefen Temperaturen möglich. Durch den Preßvorgang mit Hilfe des Stempels wird die gekühlte und eigentlich sehr feste Butter durch die vergleichsweise kleine Abgabeöffnung gepreßt, wobei es zu einer Verformung des vorher größeren Butterblocks kommt und dadurch das Streichfett vergleichsweise weich und streichbar wird. Die Abgabeöffnung ist also im Querschnitt kleiner als das Behältnis zur Aufnahme des Streichfetts, in dem der verfahrbare Stempel wirkt, so daß es in jedem Fall zu einer mechanischen Umformung während des Preßvorganges kommen muß, durch den das Streichfett weich und streichbar wird.

Das Gehäuse weist günstigerweise einen etwa auf halber Höhe nach innen gerichteten Rand zur Aufnahme des Behältnisses auf, so daß das Behältnis, das günstigerweise im oberen Bereich einen nach außen vorstehenden Rand aufweist, mit dem Rand des Gehäuses zusammenwirkt und so das Behältnis in das Gehäuse einsetzbar ist.

Erfindungsgemäß ist in der Vorrichtung, insbesondere in dem Gehäuse, eine Kühleinrichtung vorgesehen, mit der insbesondere das Behältnis zur Aufnahme des Streichfettes kühlbar ist. Hierfür kann beispielsweise ein Peltier-Element zum Einsatz kommen. Auf diese Weise ist das Streichfett gekühlt und bleibt dauerhaft haltbar. Ergänzend kann eine Erwärmungseinrichtung in der Vorrichtung, insbesondere in dem Gehäuse der Vorrichtung, vorgesehen sein, mit der das Behältnis zur Aufnahme des Streichfettes im Bereich der Abgabeeinrichtung erwärmbar ist, so daß die Festigkeit und damit die Streichfähigkeit des Streichfettes beeinflußt werden kann. Für diese Erwärmungseinrichtung ist es insbesondere günstig, die in der Kühleinrichtung entstehende Abwärme zu nutzen. Günstig ist es dabei, die Abgabeöffnung oder die Abgabeeinrichtung mit thermisch isolierendem Material von dem übrigen Behältnis zur Aufnahme des Streichfettes zu trennen, so daß dieses gekühlt werden kann und gleichzeitig die Abgabeöffnung erwärmbar ist.

Die Antriebseinrichtung weist bevorzugt einen Motor und eine Spindel auf, wobei hier auf bekannte Kugelgewindegetriebe für Linearsysteme oder andere Ausführungsformen zurückgegriffen werden kann. Der Motor ist bevorzugt ein Schrittmotor, so daß eine besonders genaue Dosierung des abzugebenden Streichfettes möglich ist. In einer alternativen Ausführungsform ist die Antriebseinrichtung als pneumatischer Antrieb ausgebildet. Auch andere Antriebsformen, wie beispielsweise rein mechanische Antriebseinrichtungen, beispielsweise mit einem Betätigungshebel, sind denkbar.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1:: eine schematische Querschnittsansicht einer erfindungsgemäßen Vorrichtung
- Fig. 2:: eine schematische Querschnittsansicht einzelner Baugruppen,
- Fig: 3:: eine schematische Querschnittsansicht einer zweiten Ausführungsform der Erfindung; und
- Fig. 4:: eine Querschnittsansicht einer dritten Ausführungsform gemäßen Vorrichtung.

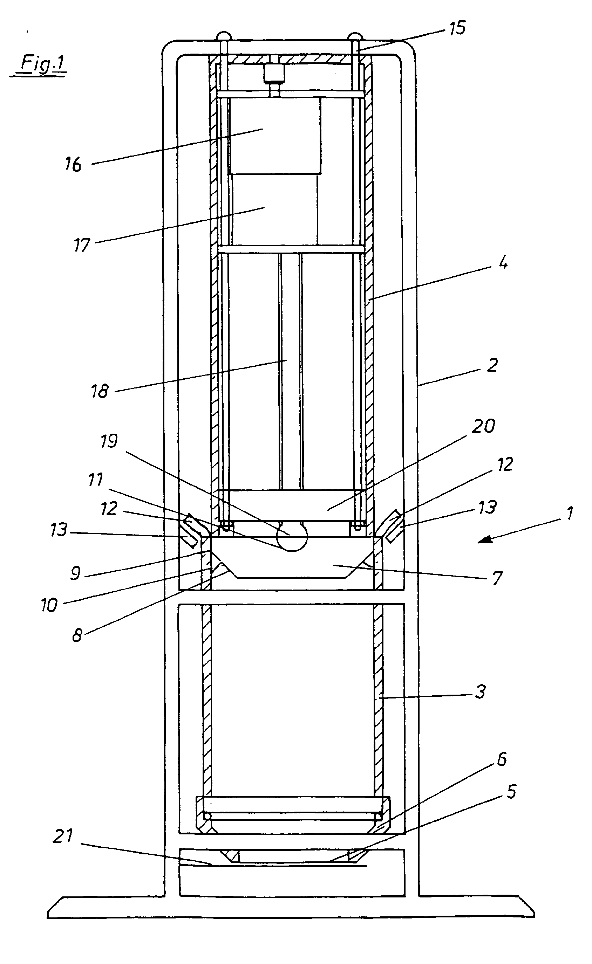

In Fig. 1 ist eine schematische Querschnittsansicht der gesamten Vorrichtung 1 dargestellt, die ein Gehäuse 2 aufweist, in der eine Antriebseinrichtung 4 und ein darunter angeordnetes Behältnis 3 zur Aufnahme des Streichfettes angeordnet sind. In dem Behältnis 3 ist ein Stempel 7 vorgesehen, der in vertikaler Richtung verfahrbar, insbesondere nach unten verfahrbar ist, so daß das in dem Behältnis 3 befindliche Streichfett durch eine Abgabeöffnung, die sich in der Abgabeeinrichtung 5 befindet, nach unten abgegeben werden kann. An dem Stempel, nämlich an den schräg zulaufenden Seiten 8 des Kegelstumpfes des Stempels 7, ist eine nach außen vorstehende Dichtlippe 10 angeordnet, die von dem Stempel 7 bis zu der Wand des Behältnisses reicht und auf diese Weise für eine Abdichtung des Stempels gegen die Wand sorgt und das Streichfetts, auch in diesem Bereich sicher nach unten befördert. Diese Dichtlippe 10 ist bevorzugt aus Hartgummi ausgebildet. Weiterhin sind in dem Stempel schematisch Dichtelemente 9 angedeutet, die als O-Ring ausgebildet sind und unmittelbar den Stempel 7 an seiner Basis gegen das Gehäuse abdichten. Eine derartige Abdichtung ist vor allem beim Einsatz von pneumatischen Antrieben günstig. Die Abgabeeinrichtung 5 ist eine wechselbare Platte, die mit einem Gewinde in die Unterseite des Behältnisses 3 einschraubbar ist. Das Behältnis 3 weist an der Oberseite einen nach außen gebogenen oder umgebördelten Rand 12 auf, der dazu ausgelegt ist, in einen entsprechend gebildeten, nach innen vorstehenden Vorsprung 13 des Gehäuses 2 einzugreifen, so daß das Behältnis 3 durch eine Ausnehmung in der Gehäusewand in das Gehäuse und die in dem Gehäuse vorgesehenen Vorsprünge 13 eingeschoben werden kann. Insgesamt wird auf diese Weise ein Schnellwechselmechanismus gebildet. Der Stempel 7 weist die Form eines Kegelstumpfes auf und ist damit an den unteren Bereich des Behältnisses 3 angepaßt, der zulaufend ausgebildet ist. Der verjüngte Endbereich ist mit 6 gekennzeichnet.

Im Oberteil des Gehäuses 2 ist die Antriebseinrichtung 4 angeordnet, die mit Schrauben 15 mit dem Gehäuse 2 verbunden ist. Die Antriebseinrichtung weist insbesondere einen Motor 16 und ein Getriebe 17 auf, die eine Gewindestange 18 antreiben. Mit der Gewindestange 18 wird eine Kugel 19 angetrieben, die in eine Mulde 11 des Stempels 7 eingreift. Durch die Ausgestaltung der Kugel 19 und der Mulde 11 ist eine formschlüssige Verbindung gegeben. Dabei ist die Querstrebe 20 mit einem Gewinde ausgerüstet und fest in dem Gehäuse angeordnet. Die Gewindestange 18 wird dann von dem Motor 16 rund dem Getriebe 17 in Drehung versetzt und zieht sich durch das Innengewinde der Querstrebe 20 nach unten, wobei der Motor 16 und das Getriebe 17 mit nach unten bewegt werden.

Unterhalb der Abgabeöffnung 5 ist eine Schneideinrichtung 21 angeordnet, die als sich bewegendes Messer ausgebildet ist, das automatisch nach jeder Motorbewegung ausgelöst wird. Hierzu steht die Schneideinrichtung 21 in Datenverbindung mit dem Motor.

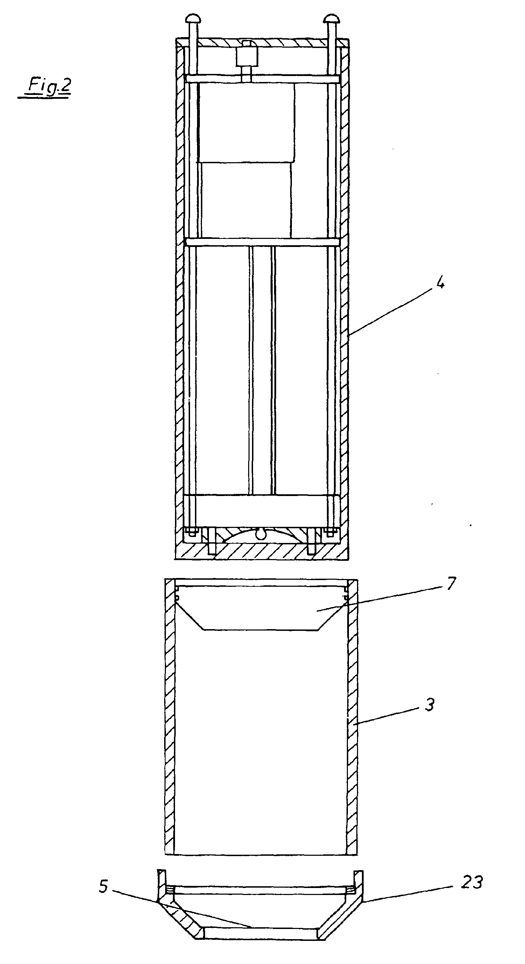

In Fig. 2 ist eine Querschnittsansicht der verschiedenen Baugruppen dargestellt, insbesondere der Antriebseinrichtung 4 und des Behältnisses 3. Das Behältnis 3 weist neben dem zylinderförmigen Hauptteil noch einen unteren Ansatz 23 auf, der ein Innengewinde aufweist, mit dem der Ansatz 23 an den darüber positionierten Teil des Behältnisses 3 anschraubbar ist. Der Ansatz 23 ist nach unten verjüngt mit zulaufenden Seitenwänden ausgebildet und weist zudem die Abgabeeinrichtung 5 mit der Abgabeöffnung auf. Da der Ansatz 23 abnehmbar ist, läßt sich das Behältnis 3 besonders einfach befüllen und auch reinigen.

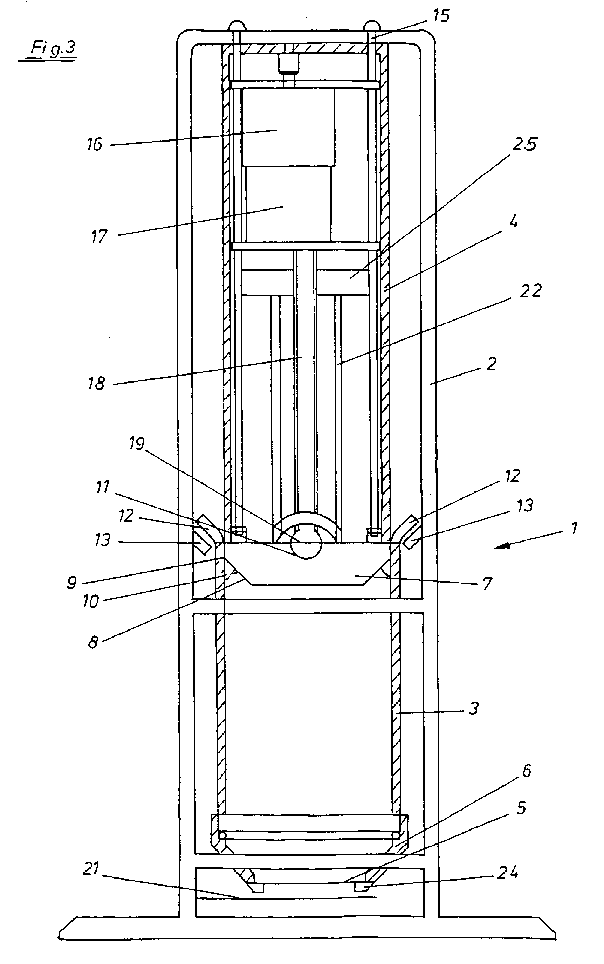

In Fig. 3 ist eine alternative Ausführungsform dargestellt, bei der insbesondere ein Unterschied zu der Ausführungsform gemäß Fig. 1 darin zu sehen ist, daß die Abgabeeinrichtung 5 auf einen abschließenden Falz 24 des Behältnisses 3 von oben eingelegt ist und nicht eingeschraubt werden braucht. Weiterhin ist der Antrieb hier insoweit anders ausgebildet, als Getriebe 17 und Motor 16 fest in der Antriebseinrichtung 4 angeordnet sind und die Gewindestange 18 in Drehung versetzen, so daß eine verdrehsicher in der Antriebseinrichtung 4 gelagerte Gewindeplatte 25 mit Innengewinde an der Gewindestange 18 nach oben oder unten bewegt wird und ein an der Gewindeplatte 25 angeordnetes Rohr 22, das die Gewindestange 18 umgreift, auf den Stempel 7 drückt und diesen nach unten bewegt. In einer nicht dargestellten Weiterentwicklung dieser Ausführungsform sind Motor 16 und Getriebe 17 nicht oberhalb der Gewindestange 18, sondern seitlich davon in der Antriebseinrichtung angeordnet, wobei die Gewindestange 18 und das Getriebe 17 über Zahnräder oder einen Riemenantrieb miteinander verbunden sind. Mit einer solchen Ausführungsform läßt sich die Bauhöhe verringern und eine insgesamt kompaktere Bauweise erreichen.

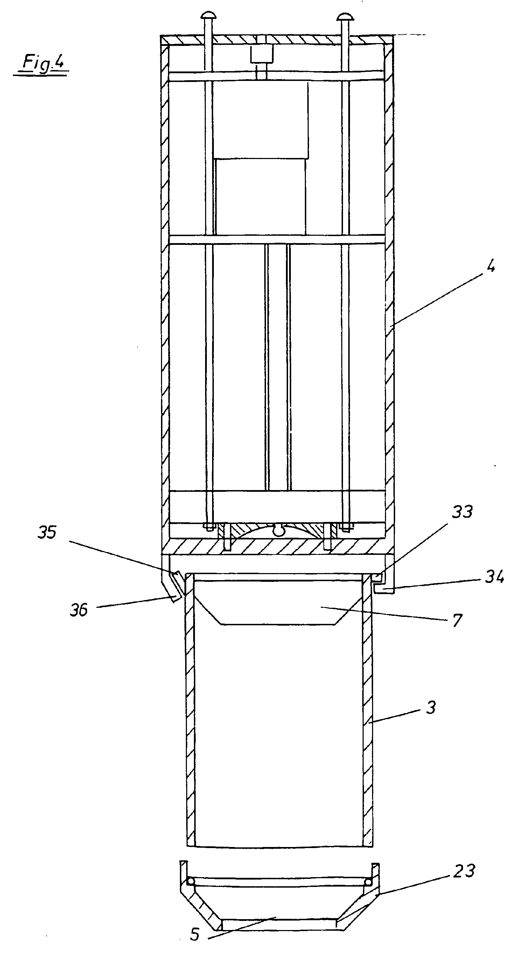

In Fig. 4 ist eine weitere Ausführungsform der erfindungsgemäßen Vorrichtung dargestellt, die sich insbesondere dadurch auszeichnet, daß die Antriebseinrichtung 4 mit einem etwas größeren Durchmesser als das Behältnis 3 ausgebildet ist und das Behältnis 3 mit Vorsprüngen in entsprechenden Nuten oder Falze des Behältnisses 3 eingreift, so daß das Behältnis 3 direkt mit der Antriebseinrichtung 4 in Verbindung steht und nicht an einem zusätzlichen Gehäuse 2 befestigt werden muß. Auf diese Weise ist eine direktere Kraftübertragung möglich. Dabei können die Vorsprünge des Behältnisses 3 entweder grade und rechtwinklig wie auf der rechten Seite der Figur mit 33 gekennzeichnet, in den entsprechend rechtwinklig ausgebildeten Falz 34 eingreifen oder, wie auf der linken Seite dargestellt, mit schräg nach außen verlaufenden Vorsprüngen 35 in entsprechend schräg verlaufende Falzen 36 eingreifen. Auch bei einer solchen Ausführung kann abweichend von der gezeigten Antriebseinrichtung, die der in Figur 1 entspricht, auch ein Antrieb mit einem zusätzlichen Rohr gemäß der in Figur 3 beschriebenen Ausführungsform zum Einsatz kommen.

In der Antriebseinrichtung list bevorzugt eine elektronische Steuerung vorgesehen, die derart ausgebildet ist, daß bei Inbetriebnahme zunächst die Kugel 19 so weit nach unten fährt, bis eine Last anliegt. Dann wird durch autorisierte Benutzer der Stempel 7 so weit heruntergefahren, bis Streichfett abgegeben wird. Danach erfolgt die weitere Abgabe so, daß bei jeder Auslösung des Schalters durch einen Benutzer der Motor 16, der bevorzugt ein Schrittmotor ist, ein bestimmtes Stück herunterfährt, so daß eine definierte Portion aus der Abgabeöffnung herausgepreßt und mit der Schneideinrichtung abgetrennt wird. Wenn der Stempel den unteren Bereich des Behältnisses erreicht, fährt der Motor die Preßeinrichtung automatisch in die Ausgangsposition nach oben zurück.

Die Vorrichtung ist aus lebensmittelechten Materialien, insbesondere aus Edelstahl und Kunststoff, aufgebaut.

## Patentansprüche

1. Vorrichtung zur Abgabe von Streichfett, insbesondere Butter, in Kleinportionen, mit einem Gehäuse und einem in diesem lösbar eingesetzten Behältnis (3) zur Aufnahme des Streichfettes, mit einem in dem Behältnis (3) verfahrbaren Stempel (7), auf den eine Antriebseinrichtung (4) wirkt, und mit einer Kühleinrichtung, mit der das Behältnis (3) kühlbar ist, wobei das Behältnis (3) eine Abgabeöffnung aufweist, die im Querschnitt kleiner als das Behältnis (3) ist.

2. Vorrichtung nach Anspruch 1, **dadurch gekennzeichnet, daß** das Behältnis (3) im wesentlichen zylindrisch ist.

3. Vorrichtung nach einem der Ansprüche 1 oder 2, **dadurch gekennzeichnet, daß** das Behältnis (3) im Bereich der Abgabeöffnung verjüngt ausgebildet ist.

4. Vorrichtung nach einem der vorhergehenden Ansprüche, **dadurch gekennzeichnet, daß** unterhalb der Abgabeöffnung eine Schneideinrichtung (21) vorgesehen ist.

5. Vorrichtung nach Anspruch 4, **dadurch gekennzeichnet, daß** die Schneideinrichtung (21) in Datenverbindung zu der Antriebseinrichtung (4) steht.

6. Vorrichtung nach einem der vorhergehenden Ansprüche, **dadurch gekennzeichnet, daß** die Abgabeöffnung in einer wechselbaren Abgabeeinrichtung (5) angeordnet ist.

7. Vorrichtung nach einem der vorhergehenden Ansprüche, **dadurch gekennzeichnet, daß** der Stempel (7) in seiner Form dem verjüngten Endbereich (6) des Behälters angepaßt ist.

8. Vorrichtung nach einem der vorhergehenden Ansprüche, **dadurch gekennzeichnet, daß** der Stempel (7) eine umlaufende Dichtlippe (10) aufweist.

9. Vorrichtung nach einem der vorhergehenden Ansprüche, **dadurch gekennzeichnet, daß** Dichtelemente (9) vorgesehen sind.

10. Vorrichtung nach einem der vorhergehenden Ansprüche, **dadurch gekennzeichnet, daß** der Stempel (7) an seiner Oberseite eine Verbindungseinrichtung aufweist.

11. Vorrichtung nach Anspruch 10, **dadurch gekennzeichnet, daß** die Verbindungseinrichtung als Mulde (11) ausgebildet ist.

12. Vorrichtung nach einem der vorhergehenden Ansprüche, **dadurch gekennzeichnet, daß** die Antriebseinrichtung (4) in einem oberen Teil der Vorrichtung (1) angeordnet ist.

13. Vorrichtung nach Anspruch 12, **dadurch gekennzeichnet, daß** das Gehäuse (2) der Vorrichtung (1) etwa auf halber Höhe einen nach innen gerichteten Rand (13) zur Aufnahme des Behältnisses (3) aufweist.

14. Vorrichtung nach einem der Ansprüche 12 oder 13, **dadurch gekennzeichnet, daß** das Behältnis (3) im oberen Bereich einen nach außen vorstehenden Rand (12) zum Zusammenwirken mit dem Gehäuse (2) aufweist.

15. Vorrichtung nach einem der vorhergehenden Ansprüche, **dadurch gekennzeichnet, daß** in der Vorrichtung, insbesondere in dem Gehäuse der Vorrichtung, eine Erwärmungseinrichtung vorgesehen ist, mit der das Behältnis (3) im Bereich der Abgabeöffnung erwärmbar ist.

16. Vorrichtung nach einem der vorhergehenden Ansprüche, **dadurch gekennzeichnet, daß** die Antriebseinrichtung einen Motor (16) und eine Spindel (18) aufweist.

17. Vorrichtung nach Anspruch 16, **dadurch gekennzeichnet, daß** der Motor (16) ein Schrittmotor ist.

18. Vorrichtung nach einem der Ansprüche 16 oder 17, **dadurch gekennzeichnet, daß** die Spindel (18) über eine Gewindeplatte (23) ein Rohr (22) bewegt, das auf den Stempel (7) wirkt.

19. Vorrichtung nach einem der Ansprüche 1 bis 15, **dadurch gekennzeichnet, daß** die Antriebseinrichtung pneumatisch arbeitet.

## Claims

1. A device for dispensing spreadable fat, especially butter, in small portions, including a housing and a container (3) removably inserted therein for receiving the spreadable fat, a plunger (7) traveling within the container (3), upon which a driving means (4) acts, and a cooling means by which the container (3) can be cooled, wherein the container (3) comprises a dispensing opening, which is smaller in cross section than the container (3).

2. The device according to claim 1, **characterized in that** the container (3) is substantially cylindrical.

3. The device according to any one of the claims 1 or 2, **characterized in that** the container (3) is formed tapered in the area of the dispensing opening.

4. The device according to any one of the preceding claims, **characterized in that** a cutting means (21) is provided below the dispensing opening.

5. The device according to claim 4, **characterized in that** the cutting means (21) is in data connection with the driving means (4).

6. The device according to any one of the preceding claims, **characterized in that** the dispensing opening is arranged in an exchangeable dispensing means (5).

7. The device according to any one of the preceding claims, **characterized in that** the plunger (7) is adapted in its shape to the tapered end area (6) of the container.

8. The device according to any one of the preceding claims, **characterized in that** the plunger (7) comprises a circumferential sealing lip (10).

9. The device according to any one of the preceding claims, **characterized in that** sealing elements (9) are provided.

10. The device according to any one of the preceding claims, **characterized in that** the plunger (7) comprises a connecting means at its top.

11. The device according to claim 10, **characterized in that** the connecting means is formed as a trough (11).

12. The device according to any one of the preceding claims, **characterized in that** the driving means (4) is arranged in an upper part of the device (1).

13. The device according to claim 12, **characterized in that** the housing (2) of the device (1) comprises an inwardly directed collar (13) for receiving the container (3) approximately at half height.

14. The device according to any one of the claims 12 or 13, **characterized in that** the container (3) comprises an outwardly protruding collar (12) in the upper area to engage with the housing (2).

15. The device according to any one of the preceding claims, **characterized in that** within the device, in particular within the housing of the device, there is provided a heating means by which the container (3) can be heated in the area of the dispensing opening.

16. The device according to any one of the preceding claims, **characterized in that** the driving means comprises a motor (16) and a spindle (18).

17. The device according to claim 16, **characterized in that** the motor (16) is a stepper motor.

18. The device according to any one of the claims 16 or 17, **characterized in that**, via a threaded plate (23), the spindle (18) moves a tube (22) acting on the plunger (7).

19. The device according to any one of the claims 1 to 15, **characterized in that** the driving means operates pneumatically.

## Revendications

1. Dispositif destiné à la distribution de graisse à tartiner, en particulier de beurre, en petites portions, avec un boîtier et un récipient (3) pour recevoir la graisse à tartiner, qui peut être enlevé dudit boîtier, avec un piston déplaçable (7) dans ledit récipient (3), entraîné par une unité d'entraînement (4), et avec un dispositif de refroidissement pour réfrigérer le récipient (3), ledit récipient (3) présentant un orifice de dosage à section transversale plus petite que celle dudit récipient (3).

2. Dispositif selon la revendication 1, **caractérisé en ce que** ledit récipient (3) est sensiblement cylindrique.

3. Dispositif selon l'une des revendications 1 ou 2, **caractérisé en ce que** ledit récipient (3) présente une section décroissante au niveau de l'orifice de dosage.

4. Dispositif selon l'une quelconque des revendications précédentes, **caractérisé en ce qu'**une unité de coupe (21) se trouve au-dessous de l'orifice de dosage.

5. Dispositif selon la revendication 4, **caractérisé en ce que** ladite unité de coupe (21) communique avec l'unité d'entraînement (4) par un circuit de transmission de données.

6. Dispositif selon l'une quelconque des revendications précédentes, **caractérisé en ce que** l'orifice de dosage se trouve dans une unité de distribution changeable (5).

7. Dispositif selon l'une quelconque des revendications précédentes, **caractérisé en ce que** la forme du piston (7) est adaptée à la partie finale effilée (6) du récipient.

8. Dispositif selon l'une quelconque des revendications précédentes, **caractérisé en ce que** ledit piston (7) présente une lèvre d'étanchéité circulaire (10).

9. Dispositif selon l'une quelconque des revendications précédentes, **caractérisé en ce que** des éléments d'étanchéité (9) sont prévus.

10. Dispositif selon l'une quelconque des revendications précédentes, **caractérisé en ce que** ledit piston (7) présente à sa face supérieure une unité de raccordement.

11. Dispositif selon la revendication 10, **caractérisé en ce que** ladite unité de raccordement est en forme d'auge (11).

12. Dispositif selon l'une quelconque des revendications précédentes, **caractérisé en ce que** ladite unité d'entraînement (4) se trouve dans une partie supérieure dudit dispositif (1).

13. Dispositif selon la revendication 12, **caractérisé en ce que** le boîtier (2) dudit dispositif (1) présente environ à mi-hauteur un bord débordant vers l'intérieur (13) pour recevoir ledit récipient (3).

14. Dispositif selon l'une des revendications 12 ou 13, **caractérisé en ce que** ledit récipient (3) présente dans sa partie supérieure un bord débordant vers l'extérieur (12) pour coopérer avec le boîtier (2).

15. Dispositif selon l'une quelconque des revendications précédentes, **caractérisé en ce que** dans ledit dispositif, en particulier dans le boîtier dudit dispositif, se trouve une unité de chauffage qui chauffe le récipient (3) au niveau de l'orifice de dosage.

16. Dispositif selon l'une quelconque des revendications précédentes, **caractérisé en ce que** l'unité d'entraînement présente un moteur (16) et une broche (18).

17. Dispositif selon la revendication 16, **caractérisé en ce que** ledit moteur (16) est un moteur pas à pas.

18. Dispositif selon l'une des revendications 16 ou 17, **caractérisé en ce que** ladite broche (18) déplace un tuyau (22) par une plaque filetée (23), entraînant ainsi ledit piston (7).

19. Dispositif selon l'une quelconque des revendications 1 à 15, **caractérisé en ce que** l'unité d'entraînement fonctionne de manière pneumatique.
